Europäisches Patentamt

European Patent Office

Office européen des brevets

(19)

(11) Numéro de publication: **0 051 521**
**B1**

(12) **FASCICULE DE BREVET EUROPEEN**

(45) Date de publication du fascicule du brevet:
22.08.84

(21) Numéro de dépôt: **81401664.8**

(22) Date de dépôt: **21.10.81**

(51) Int. Cl.³: **H 04 N 3/12**

(54) Procédé de commande d'une caractéristique optique d'un matériau.

(30) Priorité: **27.10.80 FR 8022930**

(43) Date de publication de la demande:
**12.05.82 Bulletin 82/19**

(45) Mention de la délivrance du brevet:
**22.08.84 Bulletin 84/34**

(84) Etats contractants désignés:
**CH DE GB IT LI NL**

(56) Documents cités:
**EP - A - 0 025 999**
**FR - A - 2 095 389**
**FR - A - 2 327 603**
**FR - A - 2 345 876**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Clerc, Jean Frédéric, 10, Allée du Pré Blanc, F-38240 Meylan (FR)**
Inventeur: **Robert, Jacques Domaine de la Ronce, Les Etanges A 5 Rue de la Ronce, F-92410 Ville d'Avray (FR)**

(74) Mandataire: **Mongrédien, André et al, c/o BREVATOME 25, rue de Ponthieu, F-75008 Paris (FR)**

## Description

La présente invention a pour objet un procédé de commande d'une caractéristique optique d'un matériau. Elle trouve une application en opto-électronique, et principalement dans la commande de cellules à cristaux liquides utilisées notamment comme convertisseurs d'informations électriques en informations optiques, dans le traitement des images optiques en temps réel, dans la réalisation de filtres colorés pouvant servir notamment en télévision en couleurs, et dans l'affichage analogique.

Bien qu'elle s'applique à des matériaux de formes et de dimensions quelconques, l'invention concerne plus spécialement la commande d'un imageur comprenant une cellule d'affichage constituée par un matériau comprenant une pluralité de zones réparties en matrice, et intercalées dans un système dit à bandes croisées ou, en terminologie anglo-saxonne, dans un système cross-bar. De tels systèmes comprennent une première famille de p lignes d'électrodes parallèles et une deuxième famille de q colonnes d'électrodes parallèles, les lignes et les colonnes étant croisées, une zone $x_i y_j$ du matériau étant définie par la région de recouvrement entre la ligne $x_i$ (où i est un entier qui peut prendre toutes les valeurs comprises entre l et p) et la colonne $y_j$ (où j est un entier compris entre l et q). Les bandes formées par les lignes et les colonnes d'électrodes sont de nature telle qu'elles peuvent véhiculer des signaux appropriés à l'excitation du matériau.

On connaît de nombreux dispositifs de ce genre qui utilisent par exemple, comme matériau sensible, un film de cristal liquide, et pour lesquels l'excitation est électrique. L'invention s'applique particulièrement bien à de tels dispositifs mais elle s'applique de manière plus générale à tout dispositif à bandes croisées comprenant un matériau dont une caractéristique optique peut être modifiée à l'aide d'une excitation quelconque. Cette excitation peut être de nature électrique, comme pour les cristaux liquides, mais aussi magnétique, thermique, etc. Le matériau peut être un corps solide ou liquide, amorphe ou cristallin. La caractéristique optique peut être une opacité, un indice de réfraction, une transparence, une absorption, une diffusion, une diffraction, une convergence, un pouvoir rotatoire, une biréfringence, une intensité réfléchie dans un angle solide déterminé, etc.

En dehors des cristaux liquides, on peut citer, comme matériau utilisable, par exemple les cristaux comme le sulfure de cadmium, qui présente une bande d'absorption dont le front peut être déplacé par effet thermique. Dans ce cas, la caractéristique optique commandable est l'absorption de lumière et l'excitation est un échauffement. On peut citer aussi le cas où la caractéristique optique est l'intensité de la lumière réfléchie par une membrane déformable et où ladite excitation est une force électrostatique.

Un procédé de commande connu consiste, par exemple, dans le cas d'une cellule à cristaux liquides où l'excitation est de nature électrique, à appliquer sur la ligne $x_i$ une tension $V_x$ sinusoïdale et sur les autres lignes une tension nulle, et à appliquer sur les colonnes $y_j$ des tensions $V_{yj}$ sinusoïdales de même durée et de même fréquence que la tension $V_x$, mais qui sont déphasées par rapport à celles-ci d'une quantité $\varphi_{ji}$. Ce déphasage $\varphi_{ji}$ permet de faire varier l'intensité du signal à afficher, c'est-à-dire permet d'obtenir différents niveaux de gris.

Un tel procédé de commande est décrit dans le brevet français N° 2279123 déposé le 6 février 1974 par le titulaire et intitulé: «Procédé de commande d'une caractéristique optique d'un matériau et imageur analogique mettant en œuvre ledit procédé».

Pour obtenir N niveaux de gris avec un tel procédé, il est nécessaire d'engendrer N tensions différentes $V_{yj}$. Pour appliquer sur chacune des q colonnes l'une des N tensions $V_{yj}$ sans les engendrer sur chaque microplaquette de circuit intégré (appelée communément puce), il est nécessaire d'utiliser N portes de transmission par colonne, soit q fois N portes, et de réaliser N connexions par plaquette.

La présente invention a justement pour objet un procédé de commande permettant de remédier à ces inconvénients et permettant notamment de limiter le nombre de portes de transmission et le nombre de connexion, quel que soit le nombre de niveaux de gris à afficher, c'est-à-dire de limiter la surface occupée par les connexions sur la microplaquette de circuit intégré, et ce en dépit d'une augmentation du nombre de niveaux de gris.

D'une manière générale, l'invention concerne un procédé de commande d'une caractéristique optique d'un matériau intercalé entre deux électrodes attaquées par des signaux d'excitation, caractérisé en ce que, pour obtenir une excitation dudit matériau, on applique sur lesdites électrodes une série de signaux élémentaires pendant des durées croissantes, chaque signal élémentaire étant soit égal à une constante, soit nul, l'ensemble de ces signaux élémentaires constituant une décomposition de l'excitation désirée en une base donnée.

De préférence, lesdites durées croissent comme des puissances de deux, l'ensemble des signaux élémentaires constituant alors une décomposition en base deux de l'excitation désirée. Mais toute autre loi de progression de durée correspondant à une autre décomposition de l'excitation est possible.

Plus spécialement, la présente invention est un procédé de commande d'un imageur matriciel comprenant une cellule d'affichage constituée par un matériau comprenant une pluralité de zones réparties en matrice et intercalées entre une première famille de p lignes d'électrodes parallèles et une deuxième famille de q colonnes d'électrodes parallèles, les lignes et les colonnes étant croisées, une zone $x_i y_j$ étant définie par la région du matériau recouvert par la ligne $x_i$, où i est un entier tel que $1 \leqslant i \leqslant p$, et par la colonne $y_j$, où j est un entier tel que $1 \leqslant j \leqslant q$, caractérisé en ce que, pour

commander la zone $x_iy_j$ dudit matériau, on applique sur une ligne $x_i$ une première série de signaux à valeur moyenne nulle, ladite première série étant divisée en n fractions de temps différentes, de préférence telles que la $k^{ième}$ fraction de temps soit égale à $2^{k-1}\tau$, où k est un entier tel que $1 \leqslant k \leqslant n$ et $\tau$ un intervalle de temps utile à l'excitation du matériau, et on applique sur la colonne $y_j$ une deuxième série de signaux à valeur moyenne nulle, ladite deuxième série étant également divisée en n fractions de temps telles que la $k^{ième}$ fraction de temps de la deuxième série de signaux soit de même durée que la $k^{ième}$ fraction de temps de la première série de signaux correspondante, ladite deuxième série de signaux étant telle que, pendant chaque fraction de temps, le signal de la deuxième série est soit en opposition de phase, soit en phase avec le signal de la première série correspondant.

Le découpage temporel selon l'invention permet d'afficher N niveaux de gris en utilisant que deux déphasages entre les lignes et les colonnes alors que, dans l'art antérieur, l'affichage de N niveaux de gris nécessitait l'emploi de N déphasages.

Selon un mode préféré du procédé de commande, chaque fraction de temps utile est suivie d'un temps mort $\mu$ pendant lequel aucun signal n'est appliqué aux colonnes.

Selon un autre mode préféré du procédé de commande, on commande simultanément les q zones d'une même ligne $x_i$ en appliquant simultanément sur chaque colonne le signal de la deuxième série de signaux qui lui correspond.

D'autres caractéristiques et avantages de l'invention ressortiront mieux de la description qui va suivre, donnée à titre purement illustratif et nullement limitatif. Pour plus de clarté, la description se réfère à la commande d'une caratéristique optique d'un cristal liquide sous l'effet d'un champ électrique appliqué. Comme on l'a indiqué plus haut, l'invention est d'application beaucoup plus générale mais, ces dispositifs à cristaux liquides étant actuellement bien connus et largement utilisés, il est préférable d'effectuer la description sur cet exemple.

La description se réfère aux dessins annexés, dans lesquels:

la fig. 1 représente une vue éclatée en perspective d'une cellule à cristal liquide utilisant des électrodes à bandes croisées,

la fig. 2 représente la forme des signaux appliqués aux électrodes d'une cellule à bandes croisées,

la fig. 3 représente schématiquement une partie des circuits de commande d'un imageur matriciel, selon l'invention,

la fig. 4 représente schématiquement les signaux d'entrée et sortie appliqués sur les circuits de la fig. 3.

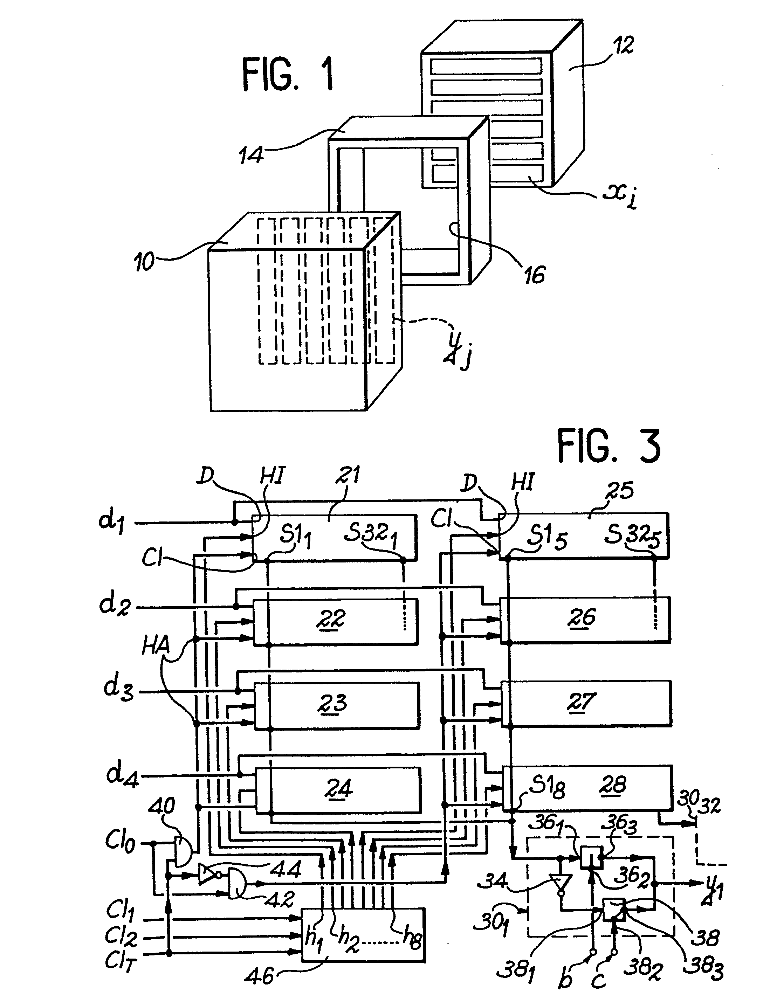

La fig. 1 représente une cellule d'affichage à bandes croisées. Elle compte deux parois 10 et 12, généralement transparentes, disposées de part et d'autre d'une cale d'épaisseur 14, en matériau isolant, définissant un volume 16 qui est occupé, lorsque la cellule est montée, par le matériau dont on commande une caractéristique optique, par exemple un film de cristal liquide. Sur les parois 10 et 12 sont déposés deux systèmes d'électrodes constitués chacun par une série de bandes parallèles conductrices semi-transparentes, notées $x_i$ pour les lignes et $y_j$ pour les colonnes. La surface utile du cristal liquide est ainsi décomposée en une mosaïque de zones correspondant aux zones de recouvrement des deux systèmes d'électrodes, chaque zone correspondant au recouvrement de deux bandes $x_i$ et $y_j$, et qui peut, de ce fait, être repéré par la notation $x_iy_j$.

La sensibilisation d'une zone, c'est-à-dire la commande d'une caractéristique optique du cristal liquide contenu dans cette zone, s'effectue en appliquant sur les électrodes $x_i$ et $y_j$ des tensions électriques qui entraînent l'apparition d'un champ électrique au sein du cristal liquide. On fait ainsi apparaître une image sur l'ensemble de la cellule en la définissant point par point et en sensibilisant les zones les unes après les autres selon des principes connus de commande séquentielle.

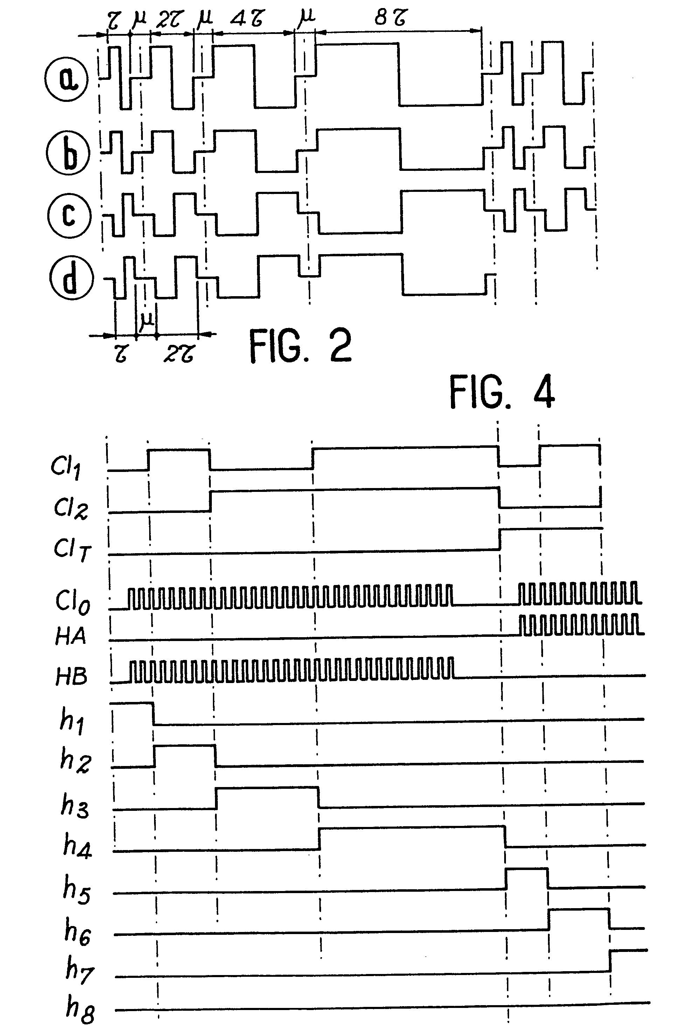

La fig. 2 illustre le procédé de commande de l'invention. Cette figure représente la forme des signaux appliqués sur la ligne $x_i$ et la colonne $y_j$ pour sensibiliser la zone $x_iy_j$ du matériau.

Pour sensibiliser ladite zone $x_iy_j$, on applique, sur la ligne $x_i$, une première série de signaux a divisée en n fractions de temps différentes telles que la $k^{ième}$ fraction de temps soit égale à $2^{k-1}\tau$, où k est un entier tel que $1 \leqslant k \leqslant n$ et $\tau$ un intervalle de temps utile de l'excitation au matériau et, sur la colonne $y_j$, une deuxième série de signaux b ou c également divisée en n fractions de temps telles que la $k^{ième}$ fraction de temps de la deuxième série de sinaux soit de même durée que la $k^{ième}$ fraction de temps de la première série de signaux correspondante.

Les lignes non sélectionnées sont portées à un même potentiel qui reste identique pendant les n fractions de temps de la période d'adressage de la ligne $x_i$ (première série de signaux a).

Pour chaque fraction de temps de la période d'adressage de la ligne $x_i$, la colonne $y_j$ reçoit, pendant la fraction de temps correspondante, soit un signal b de même phase que celui qui est appliqué à la ligne $x_i$, soit un signal c en opposition de phase par rapport à celui qui est appliqué sur ladite ligne. Chaque fraction de temps utile est suivie d'un temps mort $\mu$ pendant lequel aucun signal n'est appliqué aux colonnes. Pendant ce temps mort, on peut effectuer une commutation du signal b ou c sur la colonne $y_j$ de façon que la $k^{ième}$ fraction de temps dudit signal soit en phase ou en opposition de phase avec le signal a correspondant, suivant la caractéristique optique du matériau que l'on désire voir afficher sur l'imageur.

L'affichage correspondant à la zone $x_iy_j$ résulte de l'accumulation de toutes les excitations successives, appliquées pendant chaque fraction de temps sur la colonne $y_j$, et ce pendant toute la période d'adressage de la ligne $x_i$.

Le temps de décroissance de l'effet optique produit par l'excitation d'une ligne est suffisamment grand pour que l'ensemble de l'image soit affiché à la fin d'un balayage de toutes les lignes.

Pour obtenir l'affichage de toute une ligne $x_i$ de l'imageur matriciel, on commande simultanément les q zones de ladite ligne en appliquant simultanément sur chaque colonne le signal qui lui correspond.

Dans un imageur utilisant une cellule à cristal liquide, par exemple du type nématique, le phénomène utilisé est l'orientation collective des molécules dudit cristal parallèlement aux électrodes, lorsque ledit cristal est soumis à un champ électrique. Le phénomène utilisé dans un tel imageur est décrit dans le brevet français No 2279123, précédemment cité.

Pour éviter toute perturbation dans le liquide, due notamment à des transits d'ions, le signal d'excitation doit être à valeur moyenne nulle et de fréquence supérieure à une fréquence de relaxation des charges dans le liquide. Les signaux appliqués sur les électrodes présentent donc, par exemple, une forme rectangulaire (fig. 2).

Pour obtenir l'un des $2^n$ niveaux de gris, on exploite successivement les n fractions de temps de la deuxième série de signaux. Chaque niveau de gris que l'on désire voir afficher sur l'imageur est codé en binaire. L'élément binaire de poids 1 noté $d_1$, connu sous le nom anglo-saxon de bit, est exploité pendant la première fraction de temps, l'élément binaire de poids 2 noté $d_2$ pendant la deuxième fraction de temps..., l'élément binaire de poids $2^{n-1}$ noté $d_n$ pendant la $n^{ième}$ fraction de temps.

L'excitation du matériau, notamment du film à cristal liquide, est obtenue lorsque les signaux appliqués sur la ligne $x_i$ et la colonne $y_j$, pendant une fraction de temps donnée sont en opposition de phase; cet état est représenté par l'élément binaire 1. En revanche lorsque les signaux appliqués sur ladite ligne et ladite colonne, pendant ladite fraction de temps, sont en phase, il n'y a pas d'excitation du matériau; cet état est représenté par l'élément binaire 0.

Sur la fig. 2, on a représenté le signal d appliqué sur une colonne et correspondant au niveau de gris 7, codé en binaire 0111. Le signal appliqué sur la colonne et correspondant aux bits $d_1$, $d_2$ et $d_3$ est en opposition de phase avec le signal de la ligne correspondante, pris comme référence, tandis que le signal appliqué sur la colonne et correspondant au bit $d_4$ est en phase avec le signal de ladite ligne.

La fig. 3 représente schématiquement une partie des circuits de commande d'un imageur matriciel selon l'invention. Dans le mode de réalisation représenté sur cette figure, lesdits circuits permettent de commander 32 colonnes d'électrodes d'un imageur matriciel du type à cristaux liquides avec 16 niveaux de gris. Les moyens d'excitation séquentielle des p lignes, non représentés sur cette figure, peuvent être constitués d'un oscillateur délivrant le signal de référence commandé par une horloge définissant les séquences d'application dudit signal.

Les circuits de commande des 32 colonnes de l'imageur matriciel sont constitués d'un premier jeu de quatre registres à décalage 21, 22, 23, 24 et d'un deuxième jeu de quatre registres à décalage 25, 26, 27, 28. Le fait d'utiliser deux jeux de registres permet de lire l'un des jeux de registres pendant que l'autre est écrit, ce qui permet d'augmenter la vitesse de traitement des informations et donc de l'affichage sur l'imageur matriciel. Chacun de ces huit registres comprend une entrée série, référencée D, par laquelle arrivent les informations correspondant aux quatres bits $d_1$, $d_2$, $d_3$, $d_4$, le bit $d_1$ étant relié à l'entrée D des registres 21 et 25, le bit $d_2$ à l'entrée D des registres 22 et 26, etc., ainsi qu'une entrée dite d'horloge référencée C1 et une entrée de commande HI à haute impédance.

Les huit registres 21, 22, ..., 28 comprennent de plus 32 sorties parallèles Sj, référencées $Sj_1$ pour le registre 21, $Sj_2$ pour le registre 22, ..., avec j variant de 1 à 32, reliées chacune à un circuit 30/j (soit 30/1, ..., 30/32). Chaque circuit 30/j comporte un inverseur 34 et deux portes de transmission 36, 38 à signal analogique.

Les portes 36 et 38 comprennent respectivement une entrée de commande 36/1 et 38/1 servant à mettre les portes en position passante (porte 36) ou en position non passante (porte 38), une entrée de signal analogique (b ou c) 36/2 et 38/2 et une sortie de signal 36/3 et 38/3, ledit signal de sortie, issu soit de la porte 36, soit de la porte 38, est envoyé sur la colonne $y_j$ correspondante. L'entrée 36/2 de la porte 36 est connectée à la sortie de l'inverseur 34, lui-même étant connecté à l'entrée du circuit 30/j.

Le circuit de commande de l'imageur matriciel comprend, de plus, une première porte ET 40 à deux entrées, l'une recevant un signal d'horloge $C1_0$ et l'autre un signal d'horloge $C1_T$ et une sortie délivrant un signal HA appliqué aux entrées C1 du premier jeu de registres (12, 22, 23, 24) et une deuxième porte ET 42 à deux entrées, l'une recevant un signal d'horloge $C1_0$ et l'autre un signal d'horloge $C1_T$, dont la phase a été inversée au moyen d'un inverseur 44, et une sortie délivrant un signal HB appliqué aux entrées C1 du deuxième jeu de registres (25, 26, 27, 28).

Le circuit de commande comprend encore un décodeur 46 à trois entrées, la première recevant le signal d'horloge $C1_T$, la deuxième un signal d'horloge $C1_1$ et la troisième un signal d'horloge $C1_2$ et comportant 8 sorties délivrant 8 signaux $h_1$, $h_2$, $h_3$, $h_4$, $h_5$, $h_6$, $h_7$, $h_8$ appliqués respectivement aux registres 21, 22, 23, 24, 25, 26, 27 et 28 et commandant l'entrée haute impédance HI desdits registres.

On va maintenant décrire le fonctionnement du circuit de commande en se référant à la fig. 4, sur laquelle on a représenté les différents signaux apparaissant à différents points dudit circuit:

les signaux d'horloge $C1_1$, $C1_2$ sont envoyés sur le décodeur 46,

le signal d'horloge $C1_T$ est envoyé à la fois sur le décodeur 46, sur la porte 40 et sur l'inverseur 44,

le signal d'horloge $C1_0$ est envoyé sur la porte 40 et sur la porte 42,

les signaux HA et HB sortant respectivement de la porte 40 et de la porte 42 sont envoyés respectivement sur le premier et sur le deuxième jeu de registres,

les signaux $h_1$, $h_2$, $h_3$, $h_4$, $h_5$, $h_6$, $h_7$, $h_8$ issus du décodeur 46 sont envoyés respectivement sur l'entrée haute impédance HI des registres 21, 22, 23, 24, 25, 26, 27 et 28.

Selon l'invention, pour obtenir un niveau de gris donné sur la zone $x_i y_j$ d'un imageur matriciel, on applique sur la ligne $x_i$ un signal a constitué de quatre séquences de durée $2^{k-1} \tau + \mu$ pour la $k^{ième}$ séquence. Le découpage en quatre séquences dudit signal est obtenu à l'aide des signaux d'horloge $C1_1$ et $C1_2$.

Cette découpe est assurée par le niveau respectif des signaux $C1_1$ et $C1_2$. Le tableau ci-après illustre un exemple de découpage du signal de la ligne $x_i$ de l'imageur.

| Niveau du signal $C1_1$ | Niveau du signal $C1_2$ | Séquence | Durée de la séquence |
|---|---|---|---|
| 0 | 0 | 1re | $\tau + \mu$ |
| 1 | 0 | 2e | $2\tau + \mu$ |
| 0 | 1 | 3e | $4\tau + \mu$ |
| 1 | 1 | 4e | $8\tau + \mu$ |

Comme on l'a vu précédemment, chaque niveau de gris est codé en binaire sur quatre bits $d_1$, $d_2$, $d_3$ et $d_4$. L'entrée des informations correspondant aux différents niveaux de gris à appliquer sur les 32 colonnes d'électrodes de l'imageur se fait en parallèle dans les quatre registres d'un même jeu, chaque registre à décalage étant constitué de 32 cellules. Les registres 21 et 25 contiennent les informations correspondant au bit de poids faible $d_1$, ..., les registres 24 et 28 les informations correspondant au bit de poids fort $d_4$.

L'exploitation séquentielle des quatre bits $d_1$, $d_2$, $d_3$ et $d_4$ implique une lecture de façon séquentielle de chaque jeu de registres, comme décrit précédemment. La sélection du registre à lire est assurée par le décodeur 46, c'est-à-dire qu'à tout instant sept registres parmi les huit ont leurs 32 sorties mises en haute impédance et le huitième assure la commande des 32 circuits 30/j. La sélection du registre à lire est déterminée par les signaux d'horloge $C1_1$, $C1_2$ et $C1_T$ commandant le décodeur 46. Le signal $C1_T$ détermine le jeu de registres à lire, $C1_1$ et $C1_2$ le registre parmi les quatre dudit jeu à lire (la première séquence du tableau ci-dessus correspondant à la sélection du registre 21 ou 25). Les signaux $h_1$, $h_2$, ..., $h_8$ issus du décodeur 46 correspondent à la commande d'un des huit registres. La lecture de l'un des registres du premier jeu a lieu lorsque le niveau du signal $C1_T$ est nul, la lecture de l'un des registres du deuxième jeu a lieu lorsque le niveau du signal $C1_T$ est non nul.

Le registre en position lecture assure la commande des 32 circuits 30/j. L'un des signaux analogues b ou c arrivant par l'entrée 36/2 ou 38/2 des portes 36 et 38 est transmis à ladite colonne suivant que les portes 36 et 38 sont en position passante ou non passante. Par exemple, lorsque la porte 36 est en position passante et que la porte 38 est en position non passante, c'est le signal b qui est transmis. Inversement, lorsque la porte 38 est en position passante et que la porte 36 est en position non passante, c'est le signal c qui est transmis. La commande des portes en position passante ou non passante, réalisée au moyen de l'inverseur 34, dépend du signal arrivant à l'entrée du circuit 30/j. Après avoir lu de cette façon les 4 registres d'un même jeu, le signal final reçu par la colonne $y_j$ est par exemple le signal d (fig. 2) correspondant à l'affichage sur l'imageur du septième niveau de gris. L'utilisation d'un registre à décalage à 32 cellules permet d'afficher simultanément sur les 32 colonnes de l'imageur le niveau de gris qui lui correspond (affichage simultané d'une ligne de l'imageur).

Le fait d'utiliser deux jeux de registres permet de lire l'un des jeux pendant que le deuxième est écrit, c'est-à-dire que ce dernier enregistre les 32 informations de même poids ($d_1$, $d_2$, $d_3$, $d_4$) correspondant aux 32 colonnes de l'imageur. L'enregistrement des informations est lié aux signaux d'horloge HA et HB envoyés respectivement sur le premier jeu et le deuxième jeu de registres.

Le signal HA, fourni au premier jeu de registres, est constitué par la superposition de deux signaux d'horloge au moyen de la porte ET 40, l'un étant le signal d'horloge $C1_0$, l'autre le signal d'horloge $C1_T$. De même, le signal d'horloge HB, fourni au deuxième jeu de registres, est constitué par la superposition de deux signaux d'horloge au moyen de la porte ET 42, l'un étant le signal d'horloge $C1_0$, l'autre le signal d'horloge $C1_T$ dont la phase a été inversée au moyen de l'inverseur 44.

Chaque signal d'horloge HA et HB commande le décalage collectif, dans les 32 cellules, des registres correspondant auxdits signaux des 32 informations contenues dans ceux-ci.

De ce fait, le signal d'horloge $C1_0$ comporte, pendant toute la durée d'adressage des lignes et des colonnes d'électrodes de l'imageur autant d'impulsions que les registres comportent de cellules, donc de sorties (par exemple 32 impulsions).

Lorsqu'un jeu de registre est lu, il ne reçoit pas de signal d'horloge HA et HB, tandis que le deuxième jeu, en position écriture, reçoit le signal d'horloge qui lui correspond.

Si le signal d'horloge $C1_T$ présente un niveau nul, c'est le premier jeu de registre qui est lu. En revanche, si le signal d'horloge $C1_T$ présente un niveau non nul, c'est le deuxième jeu de registre qui est lu.

Il est à noter que la période du signal d'horloge $C1_T$ représente le double d'un temps d'adressage d'une ligne de l'imageur, le niveau 0 du signal $C1_T$ correspond à l'adressage par exemple des lignes paires de l'imageur, le niveau 1 dudit signal aux lignes impaires.

Le fait d'appliquer après chaque fraction de temps un temps mort $\mu$ permet de commuter les différents signaux à appliquer sur les colonnes de l'imageur et, en particulier, permet la commutation ou non des portes 36 et 38 en préservant de la déformation le signal de commande desdites colonnes, déformation induite par la commutation desdites portes. Cela permet en outre d'éviter l'existence d'une composante continue.

## Revendications

1. Procédé de commande d'une caractéristique optique d'un matériau permettant l'affichage de plusieurs niveaux de gris, ce matériau comprenant une pluralité de zones réparties en matrice et intercalées entre une première famille de p lignes d'électrodes parallèles et une deuxième famille de q colonnes d'électrodes parallèles, les lignes et les colonnes étant croisées, une zone $x_i y_j$ étant définie par la région du matériau recouvert par la ligne $x_i$, où i est un entier tel que $1 \leqslant i \leqslant p$, et par la colonne $y_j$, où j est un entier tel que $1 \leqslant j \leqslant q$, caractérisé en ce que, pour commander la zone $x_i y_j$ dudit matériau, on applique sur la ligne $x_i$ une première série de signaux à valeur moyenne nulle, ladite première série étant divisée en n fractions de temps différentes, et on applique sur la colonne $y_j$ une deuxième série de signaux à valeur moyenne nulle, ladite deuxième série étant également divisée en n fractions de temps telles que la $k^{ième}$ fraction de temps de la deuxième série de signaux soit de même durée que la $k^{ième}$ fraction de temps de la première série de signaux corrspondante, ladite deuxième série de signaux étant telle que, pendant chaque fraction de temps, le signal de la deuxième série est soit en opposition de phase, soit en phase avec le signal correspondant de la première série.

2. Procédé de commande binaire selon la revendication 1, caractérisé en ce que lesdites n fractions de temps différentes sont telles que la $k^{ième}$ fraction de temps soit égale à $2^{k-1} \tau$, où k est un entier tel que $1 \leqslant k \leqslant n$ et $\tau$ un intervalle de temps utile à l'excitation du matériau.

3. Procédé de commande selon l'une des revendications 1 ou 2, caractérisé en ce que chaque fraction de temps utile est suivie d'un temps mort $\mu$ pendant lequel aucun signal n'est appliqué aux colonnes.

4. Procédé de commande selon l'une des revendications 1 à 3, caractérisé en ce qu'on commande simultanément les q zones d'une même ligne $x_i$ en appliquant simultanément sur chaque colonne le signal de la deuxième série de signaux qui lui correspond.

5. Procédé de commande selon l'une des revendications 1 à 4, caractérisé en ce que les signaux sont des signaux rectangulaires.

6. Procédé de commande selon l'une des revendications 1 à 5, caractérisé en ce que le matériau est un film à cristal liquide, lesdits signaux d'excitation qui sont appliqués aux électrodes étant des tensions électriques.

## Patentansprüche

1. Verfahren zum Steuern einer optischen Charakteristik eines Materials, mit dem mehrere Grauwerte angezeigt werden können, wobei das Material eine Vielzahl von Bereichen umfasst, die matrizenförmig aufgeteilt und zwischen einer ersten Gruppe von p parallelen Zeilenelektroden und einer zweiten Gruppe von g parallelen Spaltenelektroden angeordnet sind, wobei die Zeilen ud Spalten einander kreuzen und ein Bereich $x_i y_j$ durch den Bereich des Materials bestimmt wird, der von der Zeile $x_i$, mit i einer ganzen Zahl wie $1 \leqslant i \leqslant p$, und von der Spalte $y_j$, mit j einer ganzen Zahl wie $a \leqslant j \leqslant q$ überdeckt ist, dadurch gekennzeichnet, dass man, um den Bereich $x_i y_j$ des Materials anzusteuern an die Zeile $x_i$ eine erste Folge von Signalen mit dem Mittelwert Null anlegt, wobei die erste Folge in n unterschiedliche Zeitabschnitte unterteilt ist, und an die Spalte $y_j$ eine zweite Folge von Signalen mit dem Mittelwert Null anlegt, wobei die zweite Folge ebenfalls in n Zeitabschnitte derart unterteilt ist, dass der k-te Zeitabschnitt der zweiten Signalfolge die gleiche Dauer wie der entsprechende k-te Zeitabschnitt der ersten Signalfolge aufweist, und dass die zweite Signalfolge derart ist, dass während jeden Zeitabschnittes das Signal der zweiten Folge eine zu dem entsprechenden Signal der ersten Folge entgegengesetzte Phase oder die gleiche Phase aufweist.

2. Verfahren zum binären Steuern nach Anspruch 1, dadurch gekennzeichnet, dass die n unterschiedlichen Zeitabschnitte derart sind, dass der k-te Zeitabschnitt $2^{k-1} \tau$ ist, worin k eine ganze Zahl wie $1 \leqslant k \leqslant n$ und $\tau$ ein zum Anregen des Materials geeignetes Zeitintervall bedeuten.

3. Verfahren zum Steuern nach Anspruch 1 oder 2, dadurch gekennzeichnet, dass jedem verwendbaren Zeitintervall eine Totzeit $\mu$ folgt, während der kein Signal an die Spalten angelegt wird.

4. Verfahren zum Steuern nach irgendeinem der Ansprüche 1 bis 3, dadurch gekennzeichnet, dass man gleichzeitig die q Bereiche einer gleichen Zeile $x_i$ ansteuert, indem gleichzeitig an jede Spalte das Signal der zweiten Signalfolge gelegt wird, welches dieser entspricht.

5. Verfahren zum Steuern nach irgendeinem der Ansprüche 1 bis 4, dadurch gekennzeichnet, dass die Signale Rechtecksignale sind.

6. Verfahren zum Steuern nach irgendeinem der Ansprüche 1 bis 5, dadurch gekennzeichnet, dass das Material eine Flüssigkristallschicht ist, wobei die an die Elektroden gelegten Anregungssignale elektrische Spannungen sind.

## Claims

1. Process for the control of an optical characteristic of a material permitting the display of several grey levels, said material having a plurality of zones distributed in matrix-like manner and inserted between a first group of p rows of parallel electrodes and a second group of q columns of parallel electrodes, said columns and said rows intersecting, a zone $x_i y_j$ being defined by the region of the material covered by row $x_i$, in which i is an integer such that $1 \leqslant i \leqslant p$, and by the column $y_j$, in

which k is an integer such that $1 \leqslant j \leqslant q$, characterized in that for controlling zone $x_i y_j$ of said material, a first series of signals with a zero mean value is applied to line $x_i$, said first series being subdivided into n different time fractions and to column $y_j$ is applied a second series of signals having a zero mean value, said second series also being subdivided into n time fractions, such that the $k^{th}$ time fraction of the second series of signals has the same duration as the $k^{th}$ time fraction of the corresponding first series of signals, said second series of signals being such that during each time fraction, the signal of the second series is either in phase opposition, or in phase with the corresponding signal of the first series.

2. Binary control process according to Claim 1, characterized in that said n different time fractions are such that the $k^{th}$ time fraction is equal to $2^{k-1} \tau$, in which k is an integer such that $1 \leqslant k \leqslant n$ and $\tau$ is a time interval useful in the excitation of the material.

3. Control process according to either of the Claims 1 and 2, characterized in that each useful time fraction is followed by a dead time $\mu$ during which no signal is applied to the columns.

4. Control process according to any one of the Claims 1 to 3, characterized in that the q zones of the same row $x_i$ are simultaneously controlled by simultaneously applying to each column the signal of the second series of signals corresponding thereto.

5. Control process according to any one of the Claims 1 to 4, characterized in that the signals are squarewave signals.

6. Control process according to any one of the Claims 1 to 5, characterized in that the material is a liquid crystal film, said excitation signals applied to the electrodes being voltages.

# FIG. 1

12

14

10

16

$x_i$

$y_j$

# FIG. 3

D    HI    21    D    HI    25

$d_1$    Cl

$S1_1$    $S32_1$    $S1_5$    $S32_5$

Cl

$d_2$    $\underline{22}$    $\underline{26}$

HA

$d_3$    $\underline{23}$    $\underline{27}$

$d_4$    $\underline{24}$    $S1_8$    $\underline{28}$

40    $30_{32}$

$Cl_0$    $36_1$    $36_3$

44    34    $36_2$    $y_1$

42    $30_1$    38

$Cl_1$

$Cl_2$    $h_1$    $h_2$ ....... $h_8$    $38_1$    b    c    $38_2$    $38_3$

$Cl_T$

46

0 051 521

FIG. 2

FIG. 4

11